# EUROPEAN PATENT APPLICATION

(11) **EP 4 137 977 A1**
(43) Date of publication of application: **22.02.2023**
(21) Application number: 22190828.8
(22) Date of filing: 17.08.2022
(51) Int. Cl.: G06F 21/57

(54) **COVERAGE GUIDED FUZZING OF REMOTE EMBEDDED DEVICES USING A DEBUGGER**

(30) Priority: 20.08.2021 EP 21192358
(71) Applicant: Argus Cyber Security Ltd, 6789155 Tel Aviv (IL)
(72) Inventor: Lazar, David, 90411 Nürnberg (DE)
(74) Representative: Continental Corporation

(57) **Abstract**

The invention refers to a method of testing a program, the method comprising: collecting coverage data by means of a debugger operatively connected to a device executing the program; and utilizing the coverage data to control a fuzzing engine used for testing the program. Furthermore, the invention refers to a corresponding debugger, fuzzing engine and system.

## Description

Due to the recent UNR 155 regulation, vehicle manufacturers now need to ramp up their cyber security processes, know-how, and technical capabilities in order to achieve cyber security certification and vehicle type approval. As the root cause of every cyber attack is a vulnerability, are doing all they can to ensure that they minimize the number of vulnerabilities in their vehicle software.

For non-embedded software cost-effective testing solutions exist. However, testing binary code, and not the source code, in an embedded device presents many challenges that makes testing much more complex and costly. To test these systems, one needs to emulate the entire environment, which can change from ECU to ECU.

To save costs. OEMs can use automatic testing techniques, such as fuzzing, in which multiple random or mutated messages are sent until it triggers a bug in the system. When it comes to fuzz testing an ECU, one can usually use the concept of fuzzing for interfaces, which monitor ECU resets and send potentially harmful messages, without being aware of the software the ECU runs.

When compared to coverage-guided binary fuzzing, which can modify the binary in order to monitor the coverage, this method lacks the ability to track code coverage. In other words, one will not know what percentage of the code was actually tested. The result is that the fuzzing won't be coverage-guided which leads to the inability to report the coverage percentage the tester gained as well as missing unique code paths that may contain severe software vulnerabilities.

Fuzzing or fuzz testing is an automated software testing technique that involves random data as input to a computer program. The program is then monitored for exceptions such as crashes, failing built-in code assertions, or potential memory leaks.

Fuzzing is one of the most powerful and proven strategies for identifying security issues in real-world software; it is responsible for the vast majority of remote code execution and privilege escalation bugs found to date in security-critical software.

Unfortunately, fuzzing can be relatively shallow; blind, random mutations make it very unlikely to reach certain code paths in the tested code, leaving some vulnerabilities firmly outside the reach of this technique.

In order to make fuzzing more efficient, most used fuzzers nowadays follow a technique called coverage-guided fuzzing, which collects coverage data (i.e. the edges or paths between code blocks that the program visited during execution) and utilizes to mutate inputs based on this coverage data. The goal is to maximize the coverage on the tested program, which can lead to very interesting test cases that shallow fuzzers won't be able to reach.

In order to collect coverage, a small code needed to be added to each code basic block that will report to the fuzzer which basic blocks have been reached. This is called instrumentation.

When dealing with source code fuzzing, adding instrumentation is quite easy - the compiler adds the instrumentation in compilation time.

However, when dealing with binary fuzzing - one needs to be more creative to add this instrumentation to the existing binary. The most used way is to run the binary under the context of an emulator, that will add the instrumentation when running the binary.

Embodiments of the invention suggest an automated way to collect code coverage of a live remote target embedded system as a part of a coverage-guided fuzzing process that aims to find software vulnerabilities in an authentic environment of the embedded system (e.g., while the software uses and communicates in real time with its peripheral hardware).

The problem with fuzzing binaries that originated from an embedded device is that when executing them under the context of an emulator, there is a need to simulate all the hardware peripherals that exist in the real system environment but don't exist in the emulated environment. This task is quite complicated and can take a long time, so setting up the fuzzing environment might not be worth it. Moreover, an appropriate emulator must be used for the CPU architecture of the embedded device, and if one doesn't exist, it is very time consuming and difficult to develop one.

Embodiments of the invention solve these problems by using a debugger on a live system to inject the instrumentation instead of using a standalone copy of the embedded software and running it under the context of an emulator with simulated peripherals. With this invention, it is possible to fuzz the embedded software in its authentic environment while all the hardware peripherals are up and running without the need to simulate them.

The solution is also CPU architecture agnostic that only demands a running debugger on the system (using JTAG for example), which is different from emulator based solution that needs tailored-made support for every CPU architecture.

When dealing with fuzzing binaries that originated from embedded systems, the conventional way is to use a CPU emulator (because most of the time the CPU architecture of embedded devices is different from the one of PCs). The CPU emulator can inject the instrumentation because it translates every instruction and can add its own instructions to support the instrumentation.

When running these binaries under the context of an emulator, there is a need to simulate all the hardware peripherals that exist in the real system environment but don't exist in the emulated environment.

For example, Airbus cyber security published a method for "Fuzzing exotic arch with AFL using Ghidra emulator", however, since only an emulator is used (without peripheral simulation), the problems involving peripherals still hold and their solution doesn't solve the aforementioned problem. Also, their solution is constrained to the CPU architectures supported by Ghidra's emulator.

Embodiments of the invention enable coverage guided fuzzing of remote embedded devices using a debugger. Embodiments of the invention provide, enable and/or include an automated way to collect code coverage of a live remote target embedded system as a part of a coverage-guided fuzzing process that aims to find software vulnerabilities in an authentic environment of the embedded system (e.g., while the software uses and communicates in real time with its peripheral hardware).

Embodiments of the invention include and/or enable a generic solution for coverage-guided fuzzing for embedded devices, which doesn't depend on a CPU architecture.

In some embodiments of the invention, the only prerequisite is a debugger on the target system, unlike other solutions that require a tailored-made emulator and simulated inputs (i.e. peripherals). This prerequisite is very reasonable as every system must have some sort of debugging capabilities.

In some embodiments of the invention, instrumentation is added without source code or emulator capabilities, by: initial automated program analysis to extract the basic blocks, using debugger breakpoints on each basic block to track coverage and notifying this coverage data to a fuzzing engine to generate new inputs. Accordingly, embodiments of the invention include an automated way to find software vulnerabilities on a live remote target system while peripheral hardware exists and running.

Various advantages are provided or enabled by embodiments of the invention, for example, a generic solution for coverage-guided fuzzing for embedded devices, which doesn't depend on a CPU architecture where the only prerequisite is a debugger on the target system, unlike other solutions that require a tailored made emulator and simulated inputs. This prerequisite is very reasonable as every system must have some sort of debugging capabilities. In another examples, an innovative way to embed instrumentation in embedded software without the need of source code in order to gain coverage data.

In some embodiments, initially a debugger is attached (operatively connected) to the target program on the target device (e.g., the target program will run under the context of the debugger backend). A connection between a Debugger Backend unit residing on the target device and a Debugger Frontend unit residing on the Host machine is then established. This connection can be made over a network or over serial communication channel and should be reliable and stateful to avoid packet loss, for example: TCP protocol over an Ethernet connection may be used.

In some embodiments, a fuzzing engine generates test cases based on a predefined set of input relevant to the specific software under test. For example, if an image parser is tested, the initial test cases may be images from different formats (e.g. PNG, JPEG).

The fuzzing engine may send each test case to a Middleware software, which may be software intended to bridge between the Debugger frontend unit the fuzzing engine.

The fuzzing engine may then start with a predefined corpus to test the coverage data on them and to verify that the target is stable. As it proceeds, the fuzzing engine may mutate the inputs and generate new test cases to send. The Middleware software can be executed as a subprocess of the fuzzing engine or as a standalone program. The Middleware software may pass the test case to the Debugger Frontend unit.

The Debugger frontend unit may pass commands to the Debugger backend unit in order to run the target program with the generated test case and monitor its code coverage using breakpoints. All these commands can be performed on the target program in the target device using the debugger capabilities. These commands may include setting up breakpoints on each basic block, these breakpoints can be derived from an initial block analysis of the target program, which can be performed offline with no dependency on this process.

The commands may further include inject the test case to the target program. A breakpoint will be placed just before the entry to the input processing under test in the target program. When this breakpoint is hit, the debugger will command to allocate sufficient memory in the target program memory to store the test case and write it to the appropriate location. This location needs to be defined manually according to the software under test.

The commands may further include run the program. Whenever a breakpoint is hit - update the coverage map. The coverage map is a memory region which represents all the available paths. For example, each byte can represent a tuple of: (source branch, destination branch). A hash function that maps each tuple to the appropriate byte is also required. In our solution we are using AFL++ coverage map representation.

The Debugger backend unit can receive the commands from the Debugger frontend unit over their established connection and execute them on the target program in the target device. The Debugger frontend unit can monitor the coverage map and also monitor if a crash or hang occurred based on timeout or signal monitoring. The Debugger frontend unit can pass the coverage map to the Middleware software that may pass it to the fuzzing engine.

The fuzzing engine can inspect the coverage map of the input, and in case it leads to new paths, it will save this input in its queue of pending inputs, which will be eventually mutated in order to get to even dipper code paths. Other then establishing a connection as described, the above described flow or process may be repeated any number of times.

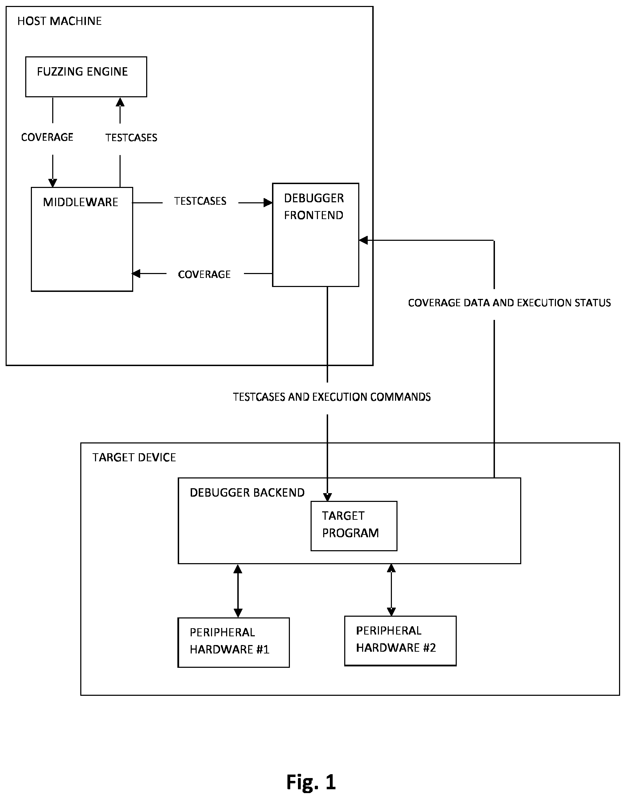

Reference is made to Fig. 1 which shows an overview of a system according to illustrative embodiments of the present invention.

The fuzzing engine may be a feedback based fuzzer (i.e. Coverage guided). It may Generate test cases (e.g., input to the target program) according to the coverage status. The fuzzing engine may use different techniques of generating test cases. For example, a fuzzing engine that is an open source software, named AFL++, which is a well known coverage-guided fuzzing engine may be used.

The middleware software may get test cases from a fuzzing engine. The middleware software may get coverage data from debugger on target device. The middleware software may sets fuzzing engine coverage map according to the coverage data. The middleware software may Notify the fuzzing engine about crashes or end of program for specific test cases.

The debugger backend may communicate with the debugger backend for sending execution commands and test cases and receiving coverage data and execution status. The debugger backend may run the actual target program under the debugging context.

The debugger front end may Define the execution commands for the debugger backend, e.g., it may set a breakpoint on the start address (defined by user), run the target program, break on start address. The debugger front end may Allocate memory on heap for fuzzer's test case (e.g. using malloc) and may set allocated buffer as input to the target function. The debugger front end may collect and send coverage data on each test case. The debugger front end may notify the fuzzer engine when crash or end of execution occurs. The test program is the program that is tested as described.

The target device can be an embedded device (e.g., an ECU) capable of running the target program while it is connected to all necessary peripheral hardware. The host machine may be any computing device or unit that runs the fuzzing engine, middleware software and Debugger frontend. For example: a Linux PC or server.

The peripheral hardware may be or include hardware components that exists in the target device. The target program communicates with this component as part of its regular operations. For example, peripheral hardware may be or include, Timers, Serial communication with other components (e.g. UART, SPI, I2C, Ethernet) and/or an External memory.

Some embodiments may deploy a debugger connected to the actual device (software debuggers and even hardware debuggers - JTAG). Apply the fuzzing actions (using AFL++ as a fuzzing engine) through the debugger functionalities (such as breakpoints, read and write to memories). Wrap the debugger and provide the fuzzing engine (i.e. AFL++) the information that it expects to receive.

Since the performance is dependent on the hardware performance, debugger performance and software implementation, some embodiments include configurable optimizations. For example, the tester can define the timeout of each run and even define the percentage of basic blocks (i.e. minimal code blocks without branches) to monitor.

The new fuzz testing method enabled by some embodiments of the invention enables users to monitor the coverage of their testing cycles, and more specifically, help to monitoring third party libraries (binaries) used in ECUs, when searching for software vulnerabilities in them.

## Claims

1. A method of testing a program, the method comprising:
collecting coverage data by means of a debugger operatively connected to a device executing the program; and
utilizing the coverage data to control a fuzzing engine used for testing the program.

2. The method of claim 1, comprising:
analyzing binary code of the program to identify one or more basic blocks in the program; and
collecting the coverage data according to execution, by the device, of the one or more basic blocks.

3. The method of claim 2, wherein identifying the one or more basic blocks in the program is done without analyzing source code of the program.

4. The methods of claims 2 and 3, comprising, mutating and sending inputs to the device, by the fuzzing engine, until a defined percentage of the one or more basic blocks is tested.

5. The method according to at least one of the preceding claims, wherein during the testing, the device interacts with a real, non-simulated, peripheral hardware which exists in a real system environment.

6. The method according to at least one of the preceding claims, wherein the device is a live, actual and non-simulated device.

7. The method according to at least one of the preceding claims, wherein the fuzzing engine generates test cases based on a predefined set of input relevant to the program.

8. A debugger adapted to:
collect coverage data related to a device while the device executes a program; and
provide the coverage data to a fuzzing engine used for testing the program.

9. A fuzzing engine adapted to:
receive coverage data from a debugger connected to a device; and
generate input to the device based on the received coverage data.

10. A system comprising a debugger and a fuzzing engine adapted to carry out at least one of claims 1-7.
